Europäisches Patentamt

(19) European Patent Office

Office européen des brevets

(11) Numéro de publication: **0 046 108**
**B1**

(12) **FASCICULE DE BREVET EUROPEEN**

(45) Date de publication du fascicule du brevet: **19.09.84**

(51) Int. Cl.³: **H 04 N 5/76**

(21) Numéro de dépôt: **81401236.5**

(22) Date de dépôt: **30.07.81**

(54) **Circuit intégré d'interface entre un récepteur de télévision, et sa prise de péritélévision.**

(30) Priorité: **08.08.80 FR 8017534**

(43) Date de publication de la demande:
**17.02.82 Bulletin 82/07**

(45) Mention de la délivrance du brevet:
**19.09.84 Bulletin 84/38**

(84) Etats contractants désignés:
**DE GB IT**

(56) Documents cités:
**FR-A-2 340 002**
**GB-A-2 037 109**
**US-A-3 795 762**
**US-A-4 031 548**

**GRUNDIG TECHNISCHE INFORMATIONEN,
vol. 26, no. 2, 1979 FURTH, DE
BAUMGARTNER: "Ein neues Chassis-konzept
für die Spitzenklasse der Grundig-
Farbfernsehgeräte", pages 55-86
FUNKSCHAU, vol. 44, no. 24, décembre 1972
München, DE SCHULZ: "Die neuen VCR-
Geräte", pages 905 et 906**

(73) Titulaire: **SOCIETE D'ELECTRONIQUE DE LA
REGION PAYS DE LOIRE SEREL
74, rue du Surmelin
F-75020 Paris (FR)**

(72) Inventeur: **Guillon, Jean-Claude**
**THOMSON-CSF SCPI 173, bld Haussmann**
**F-75360 Paris Cedex 08 (FR)**
Inventeur: **Duret, Bernard**
**THOMSON-CSF SCPI 173, bld Haussmann**
**F-75360 Paris Cedex 08 (FR)**
Inventeur: **Coschieri, Jean-Claude**
**THOMSON-CSF SCPI 173, bld Haussmann**
**F-75360 Paris Cedex 08 (FR)**
Inventeur: **Van Den Driessche, Michel**
**THOMSON-CSF SCPI 173, bld Haussmann**
**F-75360 Paris Cedex 08 (FR)**

(74) Mandataire: **Grynwald, Albert et al**
**THOMSON-CSF SCPI 173, Bld Haussmann**
**F-75379 Paris Cedex 08 (FR)**

Courier Press, Leamington Spa, England.

EP 0 046 108 B1

(56) Documents cités:
**GRUNDIG TECHNISCHE INFORMATIONEN, vol. 16, no. 3, 1969 FURTH, DE "Der Bild-Ton-Adapter 900 zum Anschluss des Video-Recorders BK100 an Fernsehempfänger", pages 397-400**
**ELECTRONIC APPLICATIONS BULLETIN, vol. 33, no. 1, juillet 1975 Eindhoven, NL SMAAL: "TV receivers as domestic video accessories", pages 1-11**
**IEEE TRANSACTIONS ON BROADCAST AND TELEVISION RECEIVERS, vol. BTR-18, no. 2, mai 1972 New York, US KOUBEK: "The probable impact of video recorders and video players on circuit design of tv receivers" pages 98-103**

## Description

La présente invention concerne un circuit intégré d'interface entre un récepteur de télévision et sa prise de péritélévision permettant par exemple le branchement d'un magnétoscope.

De tels circuits d'interface sont généralement réalisés en composants discrets, et permettent la commutation de différentes voies audio et vidéo provenant soit du récepteur de télévision noire et blanc ou couleur, soit d'une source extérieure qui peut être un magnétoscope.

Un tel circuit d'interface est décrit dans l'article intitulé "TV receivers as domestic video accessories" volume 33 N° 1 Juillet 1975 pages 1 à 11 de la revue "Electronic Applications Bulletin".

La présente invention se propose d'élaborer un circuit intégré comportant dans un même circuit tous les étages permettant un interfaçage efficace entre le récepteur de télévision et sa prise péritélévision, permettant ainsi un gain de place appréciable par rapport au circuit de l'art antérieur, mais aussi une meilleure disposition au sein du récepteur, la prise péritélévision se trouvant alors solidaire et proche de l'ensemble de commutation. La présente invention présente aussi l'avantage d'être d'un prix de revient beaucoup plus faible que les circuits de l'art antérieur.

L'invention, selon un premier aspect, fournit un circuit intégré qui permet d'utiliser le récepteur de télévision comme amplificateur d'une source stéréophonique extérieure et même d'une source intérieure ou encore dans le cas d'une réception bilingue avec un récepteur prévu à cet effet, l'invention permet de choisir l'une ou l'autre des langues reçues. Selon un second aspect l'invention fournit un tel circuit intégré d'interface qui permet, au choix, l'utilisation d'un magnétoscope haute fréquence ou d'un magnétoscope vidéo.

Ainsi l'invention concerne, selon son premier aspect, un circuit d'interface entre un récepteur de télévision et sa prise de péritélévision pour le raccordement d'une source extérieure telle qu'un magnétoscope qui comporte un étage d'interface vidéo, un étage d'interface audio et un étage de commutation pour sélectionner d'une part soit le signal vidéo intérieur, soit le signal vidéo extérieur provenant de la source extérieure et d'autre part, soit le signal audio intérieur soit le signal audio extérieur, qui est caractérisé en ce que lesdits étages sont dans un même circuit intégré et en ce que l'étage d'interface audio comprend un voie gauche et une voie droite ainsi qu'un ensemble de commutateurs et un moyen de commande montés de façon telle qu'un signal audio en entrée d'une des deux voies, gauche ou droite, puisse être disponible simultanément sur les deux sorties des deux voies.

Selon son second aspect, l'invention se rapporte à un circuit d'interface entre un récepteur de télévision et sa prise de péritélévision pour la connexion à une source extérieure telle qu'un magnétoscope qui comporte un étage d'interface vidéo, un étage d'interface audio et un étage de commutation destiné à effectuer la sélection entre les signaux intérieurs et extérieurs, qui est caractérisé en ce que lesdits étages sont dans un même circuit intégré et en ce que l'étage de commutation comprend une porte "OU" dont le signal de sortie commande des commutateurs des étages audio et vidéo, dont une première entrée reçoit un signal de commande audiovisuelle extérieure fourni par la prise péritélévision et dont la seconde entrée est connectée à la sortie d'une porte "ET" dont la première entrée reçoit le signal de commande d'un sélecteur de bandes et la seconde entrée est connectée à la sortie d'un inverseur recevant le signal de commande de la touche audiovisuelle du récepteur.

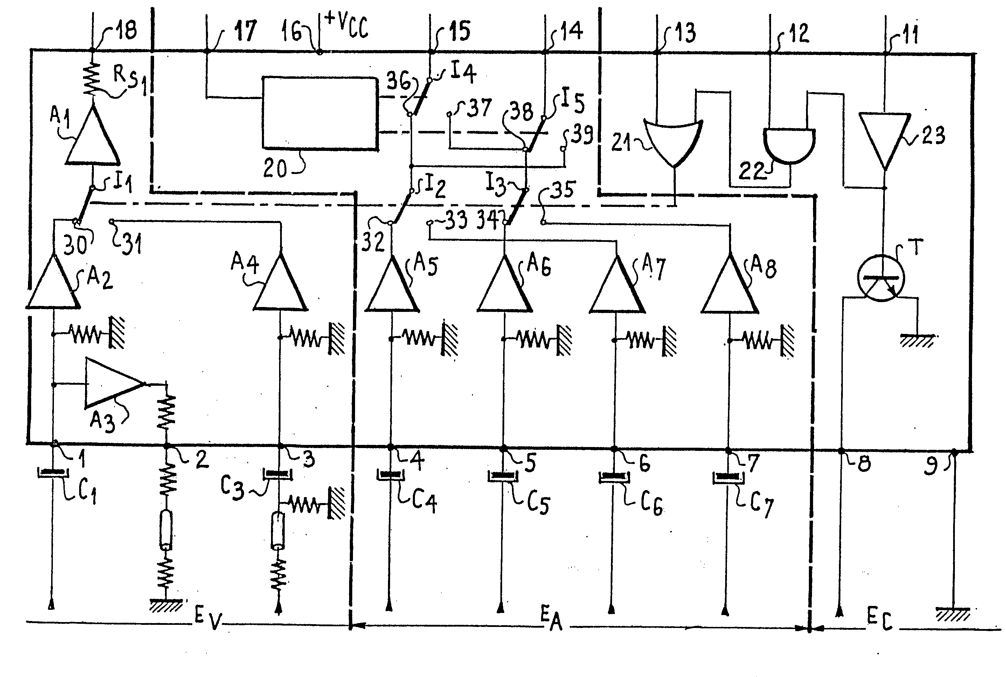

D'autres avantages et caractéristiques de l'invention ressortiront de la description suivante donnée à titre d'exemple et illustrée par la figure unique qui est un schéma du circuit d'interface selon l'invention.

Le circuit intégré d'interface comporte un premier étage, dit étage vidéo $E_v$, un second étage dit étage audio $E_A$ et un troisième étage dit étage de commutation $E_c$.

L'étage vidéo $E_A$ comporte une entrée 1, laquelle reçoit à travers un condensateur de liaison $C_1$, le signal vidéo intérieur provenant de la sortie du circuit détecteur vidéo du récepteur de télévision.

Ce signal vidéo intérieur est injecté, d'une part, en entrée d'un amplificateur intégré $A_3$ de gain 1 dont la sortie est la sortie 2 du circuit intégré d'interface. Cette sortie 2 est une sortie vidéo basse impédance extérieure (75 Ohms, 1v) et permet d'injecter, grâce à un câble 75 Ohms, le signal vidéo issu du récepteur de télévision, à l'entrée d'un magnétoscope. Le signal vidéo intérieur est injecté d'autre part en entrée d'un amplificateur intégré $A_2$ de gain $\frac{1}{2}$ dont la sortie est connectée à un premier plot 30 d'un interrupteur $I_1$ commandable électriquement, par exemple un interrupteur du type double différentiel équilibré. La commutation de cet interrupteur est symbolisée par le déplacement d'une barrette de connexion sur deux plots. Sur le dessin les commutateurs sont représentés comme des interrupteurs mécaniques mais il est clair que, s'agissant d'un circuit intégré, les interrupteurs sont électroniques.

Le second plot 31 de cet interrupteur $I_1$ est connecté en sortie d'un amplificateur intégré $A_4$ de gain 1 dont l'entrée est l'entrée vidéo extérieure 3 du circuit intégré d'interface. Cette entrée 3 peut recevoir, à travers un condensateur de liaison $C_3$, un signal vidéo fournit par un appareil externe tel qu'un magnétoscope ou encore un décodeur "Antiope". Cette entrée 3, constitue donc la partie vidéo de la prise péritélévision.

La barrette commutable de l'interrupteur $I_1$

est connectée à l'entrée d'un amplificateur de sortie $A_1$ de gain 1 dont la sortie est la sortie 18 du circuit intégré d'interface sur laquelle apparaît le signal vidéo injecté aux circuits vidéo du récepteur de télévision.

Lorsque la barrette de l'interrupteur $I_1$ est positionnée sur le plot 30, le signal intérieur provenant de l'entrée 1 est acheminé en sortie 18. Par contre, lorsque la barrette est positionnée sur le plot 31, c'est le signal vidéo extérieur provenant de l'entrée 3 qui est acheminé en sortie 18.

L'interrupteur $I_1$ permet donc de sélectionner soit le signal vidéo intérieur, soit le signal vidéo extérieur provenant de la prise péritélévision.

Dans cet étage vidéo $E_v$, les amplificateurs sont réalisés à partir d'amplificateurs différentiels contre-réactionnés, permettant ainsi d'obtenir les performances de bandes passantes désirées pour un signal vidéo, soit par exemple 6 MHz à OdB.

L'étage audio $E_A$ du circuit d'interface est, selon une caractéristique de l'invention, conçu pour recevoir un signal audio stéréophonique pouvant ainsi voir ses applications dans des récepteurs de télévision aux normes haute-fidélité.

Cet étage audio comporte deux entrées audio intérieur, audio intérieur gauche 4 et audio intérieur droit 5. Le signal audio provenant de la sortie du circuit détecteur son du récepteur de télévision est injecté au travers des condensateurs de liaisons $C_4$ et $C_5$ à ces entrées 4 et 5.

Chacune de ces entrées est connectée à un amplificateur intégré $A_5$ et $A_6$ de gain 1. La sortie de l'amplificateur $A_5$ est connectée à un plot d'un interrupteur $I_2$ identique à l'interrupteur $I_1$ de l'étage vidéo $E_v$.

La sortie de l'amplificateur $A_6$ est connectée à un plot d'un autre interrupteur $I_3$ identique à $I_2$.

Le plot 33 de l'interrupteur $I_2$ est connecté en sortie d'un amplificateur intégré $A_7$ de gain 3 dont l'entrée est l'entrée 6 du circuit d'interface.

Le plot 35 de l'interrupteur $I_3$ est connecté en sortie d'un amplificateur intégré $A_8$ de gain 3 dont l'entrée est l'entrée 7 du circuit intégré d'interface.

Les signaux audio provenant d'une source extérieure telle qu'un magnétoscope sont injectés au travers de condensateur de liaison $C_6$ et $C_7$ sur ces entrées 6 et 7, le signal audio gauche étant injecté en entrée 6 et le signal audio droit en entrée 7.

Les deux interrupteurs $I_2$ et $I_3$ ont leurs barrettes symboliques jumelées, de manière à commuter en même temps et de la même manière.

En effet, lorsque la barrette de l'interrupteur $I_2$ est sur le plot 32 et la barrette de $I_3$ sur le plot 34, ce sont les signaux audio intérieurs qui sont transmis en sortie, et lorsque la barrette de l'interrupteur $I_2$ est sur le plot 33 et la barrette

de $I_3$ sur le plot 35, ce sont les signaux audio extérieurs qui sont transmis en sortie.

D'autre part, la barrette de l'interrupteur $I_2$ est connectée à un plot 36 d'un interrupteur $I_4$ et à un plot 39 d'un interrupteur $I_5$. La barrette de l'interrupteur $I_3$ est connectée au plot 37 de l'interrupteur $I_4$ et au plot 38 de l'interrupteur $I_5$.

La barrette de $I_4$ est connectée en sortie audio gauche 15 et la barrette de $I_5$ est connectée en sortie audio droite 14. Ces deux sorties sont connectées aux circuits amplificateurs basse fréquence du récepteur de télévision.

Les deux interrupteurs $I_4$ et $I_5$ sont identiques à l'interrupteur $I_1$ de l'étage vidéo et sont commandés par un bloc de commande 20 fournissant deux signaux de commande, l'un pour $I_4$ et l'autre pour $I_5$ à partir d'un signal fourni sur l'entrée 17 du circuit intégré d'interface.

Ces interrupteurs $I_4$ et $I_5$ permettent d'utiliser le circuit d'interface soit en monophonie soit en stéréophonie.

En effet, supposons par exemple les interrupteurs $I_2$ et $I_3$ de commutation audio intérieur/audio extérieur, en position audio intérieur. Si la barrette de l'interrupteur $I_4$ est en 36 et celle de $I_5$ en 38, le signal audio de l'entrée 4 est acheminé en sortie 15 et le signal audio de l'entrée 5 est acheminé en sortie 14. Lorsque la barrette de l'interrupteur $I_4$ est en position 36 et $I_5$ en 39, seul le signal audio de l'entrée 4 est acheminé sur les deux sorties 15 et 14. Lorsque la barrette de l'interrupteur $I_4$ est en position 37 et $I_5$ en 38, seul le signal audio de l'entrée 5 est acheminé sur les deux sorties 15 et 14. Lorsque la barrette de l'interrupteur $I_4$ est en 37 et celle de $I_5$ en 39, le signal audio de l'entrée 4 est acheminé en sortie 14 et le signal audio de l'entrée 5 en sortie 15, entraînant une inversion des canaux gauche et droit.

Les interrupteurs $I_4$ et $I_5$ ont le même effet lorsque les interrupteurs $I_2$ et $I_3$ sont en position audio extérieur.

Les circuits d'interface audio en composants discrets de l'art antérieur présentaient l'inconvénient d'avoir un gain unitaire, rendant ainsi nécessaire des adaptations de niveau pour le signal audio provenant d'une source extérieure. Cet inconvénient a été éliminé en adoptant ici des amplificateurs de gain 3, et présentant de plus des caractéristiques haute fidélité, c'est-à-dire une bande passante par exemple à 40 Hz—16 KHz à 3dB.

Les entrées 6 et 7 du circuit intégré d'interface constituent donc les entrées audio de la prise péritélévision.

L'étage audio $E_A$ permet de plus, dans le cas d'une réception bilingue avec un récepteur prévu à cet effet, de choisir l'une ou l'autre des langues reçues. On peut en effet choisir de transmettre le signal présent sur l'entrée gauche 6 aux deux sorties audio 14 et 15 en même temps, pendant que la droite est inhibée. De même, pour le signal présent sur l'entrée droite 7.

L'étage de commutation $E_c$ comporte une

porte logique "OU" 21 dont le signal de sortie haut ou bas commande la position des barrettes des interrupteurs $I_1$, $I_2$ et $I_3$. Une entrée de cette porte 21 est l'entrée 13 du circuit d'interface, sa seconde entrée étant connectée en sortie d'une porte logique "ET" 22. Une entrée de cette porte logique 22 est l'entrée 12 du circuit d'interface. La seconde entrée de la porte 22 est connectée en sortie d'un circuit logique inverseur 23 dont l'entrée est l'entrée 11 du circuit d'interface. La sortie du circuit inverseur 23 est connectée d'autre part à la base d'un transistor de commutation T. Ce transistor T a son émetteur connecté à la masse et son collecteur constitue la sortie 8 du circuit intégré d'interface.

Une information "audio-visuelle extérieure" est fournie par la prise péritélévision en entrée 13 de l'étage de commutation $E_c$. L'état actif, par exemple un signal de 9 V à 12 V, entraîne le positionnement des interrupteurs audio et vidéo $I_1$, $I_2$, $I_3$ en position réception extérieure. En effet, lorsqu'un état haut logique est présent sur une entrée du circuit "OU", sa sortie est toujours à l'état haut.

L'utilisation d'un magnétoscope haute fréquence ou vidéo correpond à l'utilisation de l'entrée 11 du circuit d'interface. La distinction entre magnétoscope haute fréquence et magnétoscope vidéo est faite à partir d'un signal de commande du sélecteur de bande qui est injecté à l'entrée 12 du circuit d'interface. Si le sélecteur de bande du récepteur de télévision est positionné sur les bandes III impaire ou paire, le signal fourni par le magnétoscope est un signal vidéo. Si le sélecteur de bande est positionné sur une autre bande que la bande III, le signal fourni par le magnétoscope est un signal haute fréquence.

L'état actif de l'entrée 11, à laquelle peut être reliée une touche que l'on nomme touche audio-visuelle, entraîne la commutation du filtre du circuit de synchronisation ligne. En effet, l'état actif de cette entrée 11 est un état bas logique, c'est-à-dire une tension comprise entre 0 et 4 V. On trouve donc un état haut logique en sortie de l'inverseur 23. La tension correspondant à cet état haut logique est appliquée à la base du transistor T, qui passe alors d'un état bloqué à un état saturé. La fermeture du transistor T entraîne la commutation du filtre du circuit de synchronisation ligne auquel la sortie 8 (collecteur du transistor T) du circuit intégré d'interface est connectée.

L'état actif du sélecteur de bande (entrée 12) correspond au cas ou le magnétoscope est vidéo, c'est-à-dire lorsqu'il est positionné sur les bandes III paire ou impaire.

L'état actif de la touche audio-visuelle (entrée 11) simultanément avec l'état actif du sélecteur de bande (entrée 12) entraîne le positionnement des interrupteurs $I_1$, $I_2$, $I_3$ en position réception extérieure (plots 31, 33, et 35) ainsi que la commutation du filtre du circuit de synchronisation ligne.

En effet, l'état actif de la touche audio-visuelle entraîne un état bas logique en entrée 11 et l'état actif du sélecteur de bande entraîne un état haut logique en entrée 12. La porte "ET" 22 présente donc à ses deux entrées un état haut logique. Sa sortie est donc elle aussi à un état haut, entraînant un état haut sur une entrée du circuit "OU" 21 dont l'entrée passe à un état haut quelque soit l'état de l'entrée 13.

L'entrée 16 du circuit intégré d'interface est connectée à une alimentation+Vcc et l'entrée 9 à la masse. Ces deux entrées permettent l'alimentation des différents composants du circuit intégré d'interface.

Ce circuit peut être réalisé en technologie bipolaire. Il est parfaitement adapté aux récepteurs de télévision conformes aux normes françaises, et plus particulièrement aux récepteurs de haut de gamme. En effet, le circuit intégré selon l'invention permet d'utiliser le récepteur de télévision comme amplificateur d'une source stéréophonique extérieure et même, lorsque les émissions et les réceptions se feront en stéréophonie, d'une source intérieure.

## Revendications

1. Circuit d'interface entre un récepteur de télévision et sa prise de péritélévision pour le raccordement d'une source extérieure telle qu'un magnétoscope, comportant un étage d'interface vidéo ($E_v$), un étage d'interface audio ($E_A$) et un étage de commutation ($E_c$) pour sélectionner, d'une part, soit le signal vidéo intérieur soit le signal vidéo extérieur provenant de la source extérieure et, d'autre part, soit le signal audio intérieur soit le signal audio extérieur, caractérisé en ce que lesdits étages sont dans un même circuit intégré et en ce que l'étage d'interface audio comprend une voie gauche et une voie droite ainsi qu'un ensemble de commutateurs ($I_2$, $I_3$, $I_4$, $I_5$) et un moyen de commande (20) montés de façon telle qu'un signal audio en entrée d'une des deux voies, gauche ou droite, puisse être disponible simultanément sur les deux sorties (14, 15) des deux voies.

2. Circuit intégré selon la revendication 1, caractérisé en ce que l'étage d'interface audio ($E_A$) comporte deux premiers commutateurs ($I_2$, $I_3$), pour respectivement la voie droite et la voie gauche, et commandés par l'étage de commutation en fonction de la sélection effectuée entre signal intérieur et signal extérieur et deux autres commutateurs ($I_4$, $I_5$) soumis au moyen de commande (20) et dont les bornes communes sont reliées aux sorties, respectivement droite (14) et gauche (15), la borne commune de l'une ($I_2$) des deux premiers commutateurs étant reliée, d'une part, à un contact (36) de l'un ($I_4$) des seconds commutateurs et, d'autre part, à une borne (39) de l'autre ($I_5$) des seconds commutateurs, et la borne commune du second ($I_3$) des premiers commutateurs étant reliée aux autres contacts (37, 38) des seconds commutateurs ($I_4$, $I_5$).

3. Circuit intégré selon la revendication 1 ou 2, caractérisé en ce que chacune des deux voies audio intérieures comporte un amplificateur ($A_5$, $A_6$) et chacune des deux voies audio extérieures comporte également un amplificateur ($A_7$, $A_8$), les sorties de ces amplificateurs étant connectées aux bornes respectives (32, 33, 34, 35) de commutateurs ($I_2$, $I_3$) dont la position dépend de la sélection effectuée entre signal intérieur et signal extérieur.

4. Circuit intégré selon la revendication 3, caractérisé en ce qu'il comporte entre chaque entrée (4, 5) audio intérieure et le commutateur ($I_2$, $I_3$) correspondant, permettant de choisir entre la voie audio intérieure et la voie audio extérieure, un amplificateur ($A_5$, $A_6$) de gain 1.

5. Circuit intégré selon la revendication 3 ou la revendication 4, caractérisé en ce qu'il comprend entre chaque entrée (6, 7) audio extérieure et le commutateur correspondant ($I_2$, $I_3$), permettant la sélection entre voie audio intérieure et voie audio extérieure, un amplificateur ($A_7$, $A_8$) de gain 3.

6. Circuit d'interface entre un récepteur de télévision et sa prise de péritélévision pour la connexion à une source extérieure telle qu'un magnétoscope, comportant un étage d'interface vidéo ($E_v$), un étage d'interface audio ($E_A$) et un étage de commutation ($E_C$) destiné à effectuer la sélection entre les signaux intérieurs et extérieurs, caractérisé en ce que lesdits étages sont dans un même circuit intégré et en ce que l'étage de commutation ($E_C$) comprend une porte "OU" (21) dont le signal de sortie commande des commutateurs ($I_1$, $I_2$, $I_3$) des étages audio et vidéo, dont une première entrée reçoit un signal de commande audiovisuelle extérieure (13) fourni par la prise péritélévision et dont la seconde entrée est connectée à la sortie d'une porte "ET" (22) dont la première entrée reçoit le signal de commande d'un sélecteur de bande (12) et la seconde entrée est connectée à la sortie d'un inverseur (23) recevant le signal de commmande (11) de la touche audiovisuelle du récepteur.

7. Circuit intégré selon la revendication 6, caractérisé en ce que la sortie de l'inverseur (23) est reliée à la base d'un transistor (T) de commutation dont le collecteur est relié au filtre du circuit de synchronisation ligne.

8. Circuit intégré selon l'une quelconque des revendications précédentes, caractérisé en ce que l'étage vidéo ($E_v$) comporte des amplificateurs ($A_2$, $A_4$) des signaux vidéo, respectivement intérieur et extérieur, dont la sortie de chacun est connectable, selon la position d'un commutateur ($I_1$) commandé par l'étage de commutation ($E_C$), à l'entrée d'un autre amplificateur ($A_1$) dont la sortie représente le signal vidéo.

9. Circuit intégré selon la revendication 8, caractérisé en ce que l'amplificateur ($A_2$) du signal vidéo intérieur a un gain de $\frac{1}{2}$, l'amplificateur ($A_4$) a un gain égal à l'unité et l'amplificateur ($A_1$), dont l'entrée est connectable à la sortie de l'un de ces deux premiers amplificateurs, a également un gain égal à l'unité.

10. Circuit intégré selon la revendication 9, caractérisé en ce qu'il comporte une sortie (2) vidéo extérieure reliée à l'entrée (1) vidéo intérieure par l'intermédiaire d'un amplificateur ($A_3$) de gain égal à l'unité.

**Patentansprüche**

1. Schnittstellenschaltung zwischen einem Fernsehempfänger und seinem peripheren Fernsehanschluß zum Anschließen einer externen Quelle wie ein Magnetoskop, mit einer Video-Schnittstellenstufe ($E_V$), einer Ton-Schnitt-Stellenstufe ($E_A$) und einer Schaltstufe ($E_C$) zum Auswählen einerseits entweder des internen Videosignals oder des externen Videosignals, das von der externen Quelle stammt, und andererseits entweder des internen Tonsignals oder des externen Tonsignals, dadurch gekennzeichnet, daß die genannten Stufen in derselben integrierten Schaltung liegen und daß die Ton-Schnittstellenstufe einen linken Kanal und einen rechten Kanal sowie eine Gruppe von Schaltern ($I_2$, $I_3$, $I_4$, $I_5$) und eine Steuereinrichtung (20) enthält, die derart geschaltet sind, daß ein Tonsignal am Eingang eines der zwei Kanäle, linker oder rechter Kanal, gleichzeitig an den zwei Ausgängen (14, 15) der beiden Kanäle verfügbar sein kann.

2. Integrierte Schaltung nach Anspruch 1, dadurch gekennzeichnet, daß die Ton- Schnittstellenstufe ($E_A$) zwei erste Schalter ($I_2$, $I_3$) umfaßt, nämlich für den rechten bzw. linken Kanal, die durch die Schaltstufe in Abhängigkeit von der Auswahl gesteuert sind, welche zwischen dem internen Signal und dem externen Signal getroffen ist, und zwei weitere Schalter ($I_4$, $I_5$) enthält, die der Steuereinrichtung (20) unterworfen sind und deren gemeinsame Anschlüsse mit den Ausgängen, nämlich dem rechten (14) bzw. linken (15) Ausgang, verbunden sind, wobei der gemeinsame Anschluß des einen ($I_2$) der beiden ersten Schalter einerseits verbunden ist mit einem Kontakt (36) des einen ($I_4$) der zweiten Schalter und andererseits mit einem Anschluß (39) des anderen ($I_5$) der zweiten Schalter und der gemeinsame Anschluß des zweiten ($I_3$) der ersten Schalter mit den anderen Kontakten (37, 38) der zweiten Schalter ($I_4$, $I_5$) verbunden ist.

3. Integrierte Schaltung nach Anspruch 1 oder 2, dadurch gekennzeichnet, daß jeder der zwei internen Tonkanäle einen Verstärker ($A_5$, $A_6$) umfaßt und jeder der zwei externen Tonkanäle ebenfalls einen Verstärker ($A_7$, $A_8$) umfaßt, wobei die Ausgänge dieser Verstärker mit den jeweiligen Anschlüssen (32, 33, 34, 35) von Schaltern ($I_2$, $I_3$) verbunden sind, deren Stellung von der zwischen dem internen Signal und dem externen Signal getroffenen Auswahl abhängt.

4. Integrierte Schaltung nach Anspruch 3, dadurch gekennzeichnet, daß sie zwischen jedem internen Toneingang (4, 5) und dem entsprechenden Schalter (I₂, I₃), der die Wahl zwischen dem internen Tonkanal und dem externen Tonkanal gestattet, einen Verstärker (A₅, A₆) mit dem Verstärkungsfaktor 1 enthält.

5. Integrierte Schaltung nach Anspruch 3 oder 4, dadurch gekennzeichnet, daß sie zwischen jedem externen Toneingang (6, 7) und dem entsprechenden Schalter (I₂, I₃), der die Wahl zwischen einem internen Tonkanal und einem externen Tonkanal gestattet, einen Verstärker (A₇, A₈) mit dem Verstärkungsfaktor 3 umfaßt.

6. Schnittstellenschaltung zwischen einem Fernsehempfänger und seinem peripheren Fernsehanschluß zum Anschließen einer externen Quelle wie ein Magnetoskop, mit einer Video-Schnittstellenstufe (E_V), einer Ton-Schnittstellenstufe (E_A) und einer Schaltstufe (E_C), die dazu bestimmt ist, die Auswahl zwischen den internen Signalen und externen Signalen durchzuführen, dadurch gekennzeichnet, daß die genannten Stufen innerhalb derselben integrierten Schaltung vorhanden sind und daß die Schaltstufe (E_C) eine OR-Torschaltung (21) enthält, deren Ausgangssignal Schalter (I₁, I₂, I₃) der Ton- und Videostufen steuert, wovon ein erster Eingang ein externes Audiovisions-Steuersignal (13) empfängt, das von dem peripheren Fernsehanschluß geliefert wird, und wovon der zweite Eingang mit dem Ausgang einer AND-Torschaltung (22) verbunden ist, deren erster Eingang das Steuersignal eines Kanalwählers (12) empfängt und deren zweiter Eingang mit dem Ausgang eines Inverters (23) verbunden ist, der das Steuersignal (11) des Audiovisionstasters des Empfängers empfängt.

7. Integrierte Schaltung nach Anspruch 6, dadurch gekennzeichnet, daß der Ausgang des Inverters (23) mit der Basis eines Schalttransistors (T) verbunden ist, dessen Kollektor mit dem Filter der Zeilensynchronisationsschaltung verbunden ist.

8. Integriert Schaltung nach einem der vorstehenden Ansprüche, dadurch gekennzeichnet, daß die Videostufe (E_V) Verstärker (A₂, A₄) zum Verstärken des internen bzw. externen Videosignals umfaßt, deren Ausgang jeweils, je nach der Stellung eines Schalters (I₁), der durch die Schaltstufe (E_C) gesteuert ist, mit dem Eingang eines weiteren Verstärkers (A₁) verbunden ist, dessen Ausgang das Videosignal darstellt.

9. Integrierte Schaltung nach Anspruch 8, dadurch gekennzeichnet, daß der Verstärker (A₂) zum Verstärken des internen Videosignals den Verstärkungsfaktor 1/2 aufweist, während der Verstärker (A₄) den Verstärkungsfaktor 1 und der Verstärker (A₁), dessen Eingang mit dem Ausgang eines dieser beiden ersten Verstärker verbunden ist, ebenfalls den Verstärkungsfaktor 1 aufweist.

10. Integrierte Schaltung nach Anspruch 9, dadurch gekennzeichnet, daß sie einen externen Videoausgang (2) umfaßt, der mit dem internen Videoeingang (1) über einen Verstärker (A₃) verbunden ist, dessen Verstärkungsfaktor 1 beträgt.

## Claims

1. Interface circuit between a television receiver and its peripheral television terminal for the connection of an external source such as a magnetoscope, comprising a video interface stage (E_V), an audio interface stage (E_A) and a switching stage (E_C) for selecting, on the one hand, either the internal video signal or the external video signal originating from the external source and, on the other hand, either the internal audio signal or the external audio signal, characterized in that said stages are formed in the same integrated circuit and in that the audio interface stage comprises a left channel and a right channel as well as a set of switches (I₂, I₃, I₄, I₅) and control means (20) mounted in such a manner that an audio signal at the input of one of the two channels, left or right, can be available simultaneously on the two outputs (14, 15) of the two channels.

2. Integrated circuit according to claim 1, characterized in that the audio interface stage (E_A) comprises two first switches (I₂, I₃), respectively of the right channel and the left channel, and controlled by the switching stage in dependence on the selection made between the internal signal and the external signal, and two further switches (I₄, I₅) subjected to the control means (20) and the common terminals of which are connected to the outputs, right (14) and left (15) respectively, the common terminal of one (I₂) of the first switches being connected, on the one hand, to a contact (36) of one (I₄) of the second switches and, on the other hand, to a terminal (39) of the other (I₅) of the second switches, and the common terminal of the second (I₃) of the first switches being connected to the other contacts (37, 38) of the second switches (I₄, I₅).

3. Integrated circuit according to claim 1 or 2, characterized in that each of the two internal audio channels comprises an amplifier (A₅, A₆) and each of the two external audio channels likewise comprises an amplifier (A₇, A₈), the outputs of these amplifiers being connected to the respective terminals (32, 33, 34, 35) of switches (I₂, I₃) the position of which depends on the selection made between the internal signal and the external signal.

4. Integrated circuit according to claim 3, characterized in that it comprises, between each internal audio input (4, 5) and the corresponding switch (I₂, I₃) permitting the selection between the internal and external audio channels, and amplifier (A₅, A₆) of gain 1.

5. Integrated circuit according to claim 3 or claim 4, characterized in that it comprises, between each external audio input (6, 7) and the corresponding switch (I₂, I₃) permitting the selection between the internal and external audio channels, an amplifier $(A_7, A_8)$ of gain 3.

6. Interface circuit between a television receiver and its peripheral television terminal for connecting an external source such as a magnetoscope, comprising a video interface stage $(E_V)$, an audio interface stage $(E_A)$ and a switching stage $(E_C)$ for selecting between the internal and external signals, characterized in that said stages are formed within the same integrated circuit and in that the switching stage $(E_C)$ comprises an OR gate (21) the output signal of which controls switches $(I_1, I_2, I_3)$ of the audio and video stages, a first input of which receives an external audiovisual control signal (13) supplied by the peripheral television terminal and the second input of which is connected to the output of an AND gate (22) the first input of which receives the control signal from a band selector (12) and the second input of which is connected to the output of an inverter (23) receiving the control signal (11) of the audiovisual push-button of the receiver.

7. Integrated circuit according to claim 6, characterized in that the output of the inverter (23) is connected to the base of a switching transistor (T) the collector of which is connected to the filter of the line synchronization circuit.

8. Integrated circuit according to any of the preceding claims, characterized in that the video stage $(E_V)$ comprises amplifiers $(A_2, A_4)$ amplifying the internal and external video signals, respectively, and each having its output connectable, in accordance with the position of a switch $(I_1)$ controlled by the switching stage $(E_C)$, to the input of a further amplifier $(A_1)$ the output of which represents the video signal.

9. Integrated circuit according to claim 8, characterized in that the amplifier $(A_2)$ amplifying the internal video signal has the gain $\frac{1}{2}$, the amplifier $(A_4)$ has unity gain and the amplifier $(A_1)$ the input of which is connectable to the output of one of these two first-mentioned amplifiers likewise has unity gain.

10. Integrated circuit according to claim 9, characterized in that it comprises an external video output (2) connected to the internal video input (1) through an amplifier $(A_3)$ of unity gain.

0 046 108